(19) Europäisches Patentamt
European Patent Office
Office européen des brevets

(11) **EP 2 791 717 B1**

(12) **FASCICULE DE BREVET EUROPEEN**

(45) Date de publication et mention de la délivrance du brevet:
**24.10.2018 Bulletin 2018/43**

(21) Numéro de dépôt: **12799552.0**

(22) Date de dépôt: **06.12.2012**

(51) Int Cl.:
***G02B 6/00*** *(2006.01)*

(86) Numéro de dépôt international:
**PCT/EP2012/074693**

(87) Numéro de publication internationale:
**WO 2013/087518 (20.06.2013 Gazette 2013/25)**

(54) **GUIDE OPTIQUE À ÉLÉMENTS DE GUIDAGE SUPERPOSÉS ET PROCÉDÉ DE FABRICATION**

WELLENLEITER MIT ÜBEREINANDERLIEGENDEN LEITELEMENTEN UND HERSTELLUNGSVERFAHREN DAFÜR

OPTICAL GUIDE WITH SUPERPOSED GUIDANCE ELEMENTS AND METHOD OF MANUFACTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2011 FR 1161561**

(43) Date de publication de la demande:
**22.10.2014 Bulletin 2014/43**

(73) Titulaire: **Optinvent**
**35700 Rennes (FR)**

(72) Inventeurs:
• **DUBROCA, Guilhem**
**F-35700 Rennes (FR)**
• **BENOIT, Pascal**
**F-35700 Rennes (FR)**
• **HUGEL, Xavier**
**F-35700 Rennes (FR)**
• **SARAYEDDINE, Khaled**
**F-35700 Rennes (FR)**

(74) Mandataire: **Cabinet Le Guen Maillet**
**3, impasse de la Vigie**
**CS 71840**
**35418 Saint-Malo Cedex (FR)**

(56) Documents cités:
**WO-A1-2008/153528  WO-A1-2009/076125**

**Description**

La présente invention concerne un guide optique comportant une zone d'injection destinée à injecter dans le guide optique un signal lumineux et une zone d'extraction destinée à fournir le signal lumineux après transport par le guide optique.

Typiquement, un guide optique comporte une zone de guidage dans laquelle le signal lumineux est transporté par réflexion depuis la zone d'injection jusqu'à la zone d'extraction. Le cas le plus courant est celui où le signal lumineux se réfléchit successivement sur deux faces planes parallèles d'une lame. La distance entre les faces externes du guide optique sur lesquelles se reflète le signal lumineux depuis la zone d'injection jusqu'à la zone d'extraction est appelée *épaisseur* du guide optique.

L'image, ou le signal lumineux, à transporter est injectée dans le guide optique grâce à un dispositif d'injection. L'image est constituée d'un faisceau lumineux issu d'une source pouvant être une matrice de pixels LCD (*Liquid Cristal Display* en anglais ou *Affichage à Cristaux Liquides* en français) éclairés par une source de lumière. Il peut également s'agir d'une matrice de pixels OLED (*Organic Light-Emitting Diode* en anglais ou *Diode Electroluminescente Organique* en français). Un système optique à base de lentilles permet de projeter cette image sous forme d'un faisceau collimaté, qui est ensuite introduit dans le guide optique par la zone d'injection.

La taille de la zone d'injection est dépendante de l'épaisseur du guide optique qui elle-même est dépendante de la taille de la zone d'extraction et de la résolution désirée, et donc l'encombrement du dispositif d'injection l'est aussi.

Il est connu le document de brevet WO 2008/153528 A1, qui décrit un système d'affichage lumineux comprenant une première image et une seconde image éclairées par une source lumineuse. La source lumineuse peut être une pluralité de diodes électroluminescentes (LED). Un éclairage uniforme peut être obtenu grâce à l'utilisation de guides optiques.

Il est aussi connu le document de brevet WO 2009/076125 A1, qui décrit un système de rétro-éclairage comprenant des premier et second guides optiques séparés, entre leurs faces arrières respectives, par une couche interstitielle.

Il est souhaitable de fournir une solution qui permette, pour une taille de zone d'extraction donnée, de réduire l'encombrement du dispositif d'injection, c'est-à-dire de réduire la taille de la zone d'injection.

Il est notamment souhaitable de fournir une solution qui permette que la luminance perçue dans le signal lumineux fourni via la zone d'extraction soit uniforme.

Il est notamment souhaitable de fournir une solution qui soit simple à mettre en oeuvre et à faible coût.

L'invention concerne un système optique comportant un guide optique et un dispositif d'injection, tel que présenté dans la revendication 1 annexée.

Ainsi, pour une taille de zone d'extraction donnée, la zone d'injection est réduite, et par conséquent l'encombrement du dispositif d'injection servant à fournir le signal lumineux via la zone d'injection est réduit.

Selon un mode de réalisation particulier, la longueur du revêtement semi-réfléchissant est telle qu'elle permet au moins deux rebonds du signal lumineux sur ledit revêtement semi-réfléchissant.

Ainsi, l'uniformité de la luminance perçue dans le signal lumineux fourni via la zone d'extraction est accrue, notamment lorsque la réflectivité et la transmissivité du revêtement semi-réfléchissant ne sont pas égales, et que l'absorption du revêtement semi-réfléchissant est négligeable par rapport à la transmissivité et à la réflectivité (absorption inférieure à 5%).

Selon un mode de réalisation particulier, la réflectivité et la transmissivité du revêtement semi-réfléchissant sont substantiellement égales.

Ainsi, l'uniformité de la luminance perçue dans le signal lumineux fourni via la zone d'extraction est accrue.

Selon un mode de réalisation particulier, le guide optique comporte de manière superposée au moins trois éléments de guidage formant une succession d'éléments de guidage, un revêtement semi-réfléchissant séparant partiellement chaque élément de guidage de l'élément de guidage suivant. Le guide optique est en outre agencé de telle sorte que le signal lumineux transmis par un revêtement semi-réfléchissant est transmis par le revêtement semi-réfléchissant suivant sans réflexion intermédiaire.

Ainsi, la réduction de l'encombrement du dispositif d'injection est accrue. De plus, il est possible d'utiliser des éléments de guidage, tels que des lames, fabriqués dans un même matériau et de même épaisseur, ce qui simplifie et réduit le coût de la fabrication du guide optique.

Selon un mode de réalisation particulier, chaque revêtement semi-réfléchissant a une réflectivité dépendante de sa position dans la succession d'éléments de guidage, un revêtement semi-réfléchissant transmettant le signal lumineux transmis par un autre revêtement semi-réfléchissant ayant une réflectivité plus forte que celle de ce revêtement semi-réfléchissant.

Ainsi, l'uniformité de la luminance perçue dans le signal lumineux fourni via la zone d'extraction est accrue.

Selon un mode de réalisation particulier, les éléments de guidage sont de même épaisseur.

Ainsi, la fabrication du guide optique est simple et le coût est réduit.

Selon un mode de réalisation particulier, les éléments de guidage sont constitués d'un même matériau.

Ainsi, la simplicité de fabrication du guide optique et la réduction de coût sont accrues.

Selon un mode de réalisation particulier, les éléments de guidage sont fabriqués dans des matériaux différents, et leurs épaisseurs dépendent de leurs indices de réfraction et de l'angle minimum d'incidence du signal lumineux.

Ainsi, il est possible de faire un choix de matériau pour chacun des éléments de guidage qui dépend de son utilisation dans le contexte de mise en oeuvre du guide optique. Par exemple, un élément de guidage qui doit aussi comporter une structure pour permettre de fixer le dispositif d'injection peut être constitué d'un matériau offrant des propriétés mécaniques adaptées à cette contrainte, alors que chaque autre élément de guidage peut être fabriqué dans un matériau supportant de plus faibles contraintes mécaniques, donc moins cher. La flexibilité dans la fabrication du guide optique est donc accrue.

Selon un mode de réalisation particulier, le guide optique comporte de manière superposée au moins trois éléments de guidage formant une succession d'éléments de guidage, un revêtement semi-réfléchissant séparant partiellement chaque élément de guidage de l'élément de guidage suivant. Le guide optique est en outre agencé de telle sorte que le signal lumineux transmis par un revêtement semi-réfléchissant entre un élément de guidage et l'élément de guidage suivant ne pénètre pas sans réflexion dans ledit élément de guidage suivant.

Ainsi, la réduction de l'encombrement du dispositif d'injection est accrue.

Selon un mode de réalisation particulier, le guide optique comporte un groupe d'au moins trois éléments de guidage agencés de manière superposée pour former une succession d'éléments de guidage, un revêtement semi-réfléchissant séparant partiellement chaque élément de guidage de l'élément de guidage suivant. Le guide optique est en outre agencé de telle sorte que le signal lumineux transmis sans réflexion par un revêtement semi-réfléchissant est transmis par le revêtement semi-réfléchissant suivant. Le guide optique est en outre tel qu'il comporte au moins un autre élément de guidage, un revêtement semi-réfléchissant séparant partiellement cet autre élément de guidage dudit groupe d'éléments de guidage. Le guide optique est en outre agencé de telle sorte que le signal lumineux transmis par un revêtement semi-réfléchissant du groupe d'éléments de guidage ne pénètre pas sans réflexion dans ledit autre élément de guidage.

Selon un mode de réalisation particulier, pour que le signal lumineux transmis par un revêtement semi-réfléchissant entre un élément de guidage et l'élément de guidage suivant ne pénètre pas sans réflexion dans l'élément de guidage suivant, ledit élément de guidage et ledit élément de guidage suivant sont partiellement séparés par un revêtement réfléchissant.

Ainsi, en gérant des déposes de revêtement semi-réfléchissant et de revêtement réfléchissant, il est possible d'utiliser des éléments de guidage, comme des lames, de même taille et la fabrication en est simplifiée.

Selon un mode de réalisation particulier, pour que le signal lumineux transmis par un revêtement semi-réfléchissant entre un élément de guidage et l'élément de guidage suivant ne pénètre pas sans réflexion dans l'élément de guidage suivant, ledit élément de guidage suivant est absent d'une zone du guide optique où le signal lumineux est transmis par le ledit revêtement semi-réfléchissant.

Ainsi, le coût de matière est réduit.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement une portion d'un premier guide optique selon la présente invention ;
- la Fig. 2 illustre schématiquement une portion d'un second guide optique selon la présente invention ;
- la Fig. 3 illustre schématiquement une portion d'un troisième guide optique selon la présente invention ;
- la Fig. 4 illustre schématiquement une portion d'un quatrième guide optique selon la présente invention ;
- la Fig. 5 illustre schématiquement un procédé de fabrication d'un guide optique selon la présente invention ;
- les Figs. 6A à 6G illustrent schématiquement des agencements du guide optique en ce qui concerne le positionnement d'un dispositif d'injection.

Pour permettre de réduire l'encombrement du dispositif d'injection, il est proposé que le guide optique comporte au moins deux éléments de guidage partiellement séparés par un revêtement semi-réfléchissant dans une zone située entre la zone d'injection et la zone d'extraction. Ce revêtement semi-réfléchissant permet d'accroître la taille de la pupille par rapport à un guide optique à lame unique, ce qui revient, pour une dimension fixée de pupille, à réduire l'encombrement du dispositif d'injection. Afin de joindre les éléments de guidage ensemble en un seul objet tout en permettant la propagation optique, il est nécessaire d'utiliser un matériau interstitiel. En effet, tout espace d'air entre les éléments de guidage ainsi assemblés est à proscrire, ceux-ci provoquant l'apparition de réflexions totales internes, alors que l'assemblage a pour but de laisser la lumière se propager dans les différents éléments de guidage séparés partiellement par des revêtements semi-réfléchissants. Le matériau interstitiel s'étend sur toute la surface utile des éléments de guidage, y compris les zones recouvertes par le revêtement semi-réfléchissant. Ce matériau interstitiel peut par exemple être de la colle, afin d'assurer le maintien des éléments de guidage entre eux. Ce matériau interstitiel doit avoir un indice de réfraction empêchant toute réflexion totale interne, même pour un angle $\alpha_{min}$ minimum d'incidence du signal lumineux. Les réflexions provoquées par la différence d'indice entre le matériau des éléments de guidage et le matériau interstitiel sont avantageusement minimisées en assurant que la différence d'indice ne soit pas supérieure à 0.1. Pour que la taille des détails de l'image projetée à distinguer par l'utilisateur soit de l'ordre de 0.03°, le parallélisme entre les éléments de guidage est de l'ordre de 0.01°.

Dans la suite de la description, les éléments de guidage sont des lames à faces parallèles. D'autres éléments de guidage peuvent être mis en oeuvre dans le cadre de l'invention, notamment un élément de guidage comportant sur une même face, de manière juxtaposée, la zone d'injection et la zone d'extraction. Dans ce cas, le revêtement semi-réfléchissant séparant les éléments de guidage permet un rebond du signal lumineux avant extraction.

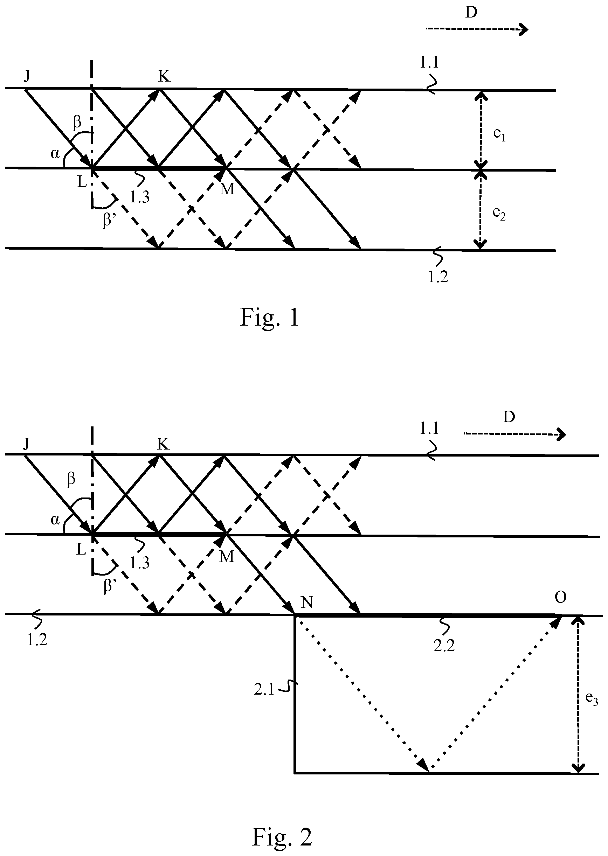

Une portion d'un premier guide optique selon la présente invention est schématiquement illustrée sur la Fig. 1 selon une vue en coupe dans la direction de propagation D d'un signal lumineux dans le guide optique.

Le premier guide optique comporte un dispositif d'injection (non représenté) destiné à permettre d'injecter le signal lumineux dans le guide optique et un dispositif d'extraction (non représenté) destiné à permettre de fournir le signal lumineux après transport par le guide optique, par exemple à l'oeil d'un utilisateur.

Le premier guide optique comporte une première lame 1.1 d'épaisseur $e_1$ et une seconde lame 1.2 d'épaisseur $e_2$. Les première 1.1 et seconde 1.2 lames sont superposées et leurs faces sont parallèles. Le signal lumineux se propage dans le guide optique par réflexions sur lesdites faces des lames.

L'agencement du dispositif d'extraction définit une zone d'extraction (non représentée) du signal lumineux sur une face de la première lame 1.1 ou de la seconde lame 1.2.

L'agencement du dispositif d'injection définit une zone d'injection du signal lumineux sur une première face de la première lame 1.1. Cette zone d'injection est représentée par le segment [J,K] sur la Fig. 1. Les rayons du signal lumineux sont injectés dans la première lame 1.1 selon un angle $\alpha$ par rapport aux faces de la première lame 1.1, ce qui correspond à un angle $\beta$ par rapport à la normale de ces faces. En d'autres termes : $\beta = \pi/2 - \alpha$.

L'angle d'incidence minimum $\alpha_{min}$ des rayons du signal lumineux est celui représenté sur la Fig. 1. La projection du point J sur la seconde face de la première lame 1.1 selon l'angle d'incidence minimum $\alpha_{min}$ est représentée par le point L. Celle du point K est représentée par le point M.

Les première 1.1 et seconde 1.2 lames sont partiellement séparées par un revêtement semi-réfléchissant 1.3, c'est-à-dire que ce revêtement semi-réfléchissant 1.3 est disposé dans une zone du guide optique située entre la zone d'injection et la zone d'extraction. Ainsi, les rayons du signal lumineux injectés dans la première lame 1.1 sont partiellement réfléchis par le revêtement semi-réfléchissant 1.3, afin de continuer leur propagation dans la première lame 1.1, et partiellement transmis par le revêtement semi-réfléchissant 1.3, afin de continuer leur propagation dans la seconde lame 1.2. Ainsi, une partie du signal lumineux reste dans la première lame 1.1 et une autre partie pénètre dans la deuxième lame 1.2. Le revêtement semi-réfléchissant 1.3 s'étend au moins sur une surface représentée par le segment [L,M] sur la Fig. 1.

Sur la Fig. 1, des rayons injectés sont représentés par des flèches en traits pleins, ainsi que les rayons résultant de la réflexion par le revêtement semi-réfléchissant 1.3 de ces rayons injectés, et les rayons résultant de la transmission par le revêtement semi-réfléchissant 1.3 de ces rayons injectés sont représentés par des flèches en traits pointillés.

Pour que le signal lumineux remplisse la première lame 1.1, l'empreinte du signal lumineux sur les faces de la première lame 1.1 est de longueur $l_1$ dans la direction de propagation D du signal lumineux dans le guide optique, avec $l_1$ telle que :

$$l_1 = \frac{2e_1}{\tan \alpha_{min}}$$

Pour que le signal lumineux remplisse la seconde lame 1.2, l'empreinte du signal lumineux sur les faces de la seconde lame 1.2 est de longueur $l_2$ dans la direction de propagation D du signal lumineux dans le guide optique, avec $l_2$ telle que :

$$l_2 = \frac{2e_2}{\tan \alpha_{min}}$$

lorsque les première 1.1 et seconde 1.2 lames sont constituées dans un même matériau.

Considérant que $l$ représente la longueur [L,M] du revêtement semi-réfléchissant 1.3 dans la direction de propagation D du signal lumineux dans le guide optique, la longueur $l$ est alors telle que :

$$l \geq \frac{2e_2}{\tan \alpha_{min}}$$

La longueur *l* est ainsi définie en fonction de l'épaisseur $e_2$ de la seconde lame 1.2 et de l'angle d'incidence minimum $\alpha_{min}$ du signal lumineux.

Dans un mode de réalisation particulier, de manière à ce que le signal lumineux remplisse plus uniformément le guide optique, l'épaisseur $e_1$ de la première lame 1.1 est égale à l'épaisseur $e_2$ de la seconde lame 1.2. Ainsi, la luminance perçue par l'utilisateur est rendue plus uniforme.

Lorsque les première 1.1 et seconde 1.2 lames sont fabriquées dans des matériaux différents, le ratio de leurs épaisseurs est :

$$\frac{e_2}{e_1} = \frac{n_2}{n_1} \frac{\sqrt{1 - \left(\frac{n_2}{n_1}\right)^2 \sin^2 \beta_{max}}}{\cos \beta_{max}}$$

où $n_1$ représente l'indice de réfraction de la première lame 1.1, $n_2$ représente l'indice de réfraction de la seconde lame 1.2 et $\beta_{max}$ correspond à la valeur de l'angle $\beta$ lorsque l'angle *a* prend la valeur $\alpha_{min}$. Ainsi, lorsque les lames sont fabriquées dans des matériaux différents, leurs épaisseurs dépendent de leurs indices de réfraction et de l'angle minimum d'incidence du signal lumineux.

En fabricant par exemple la première lame 1.1 en polyméthacrylate de méthyle (*PMMA* pour *polymethyl methacrylate* en anglais) et la seconde lame 1.2 en polycarbonate, un angle d'incidence minimum $\alpha_{min}$ égal à 23.5°, on obtient un ratio $e_2/e_1$ de l'ordre de 1.16.

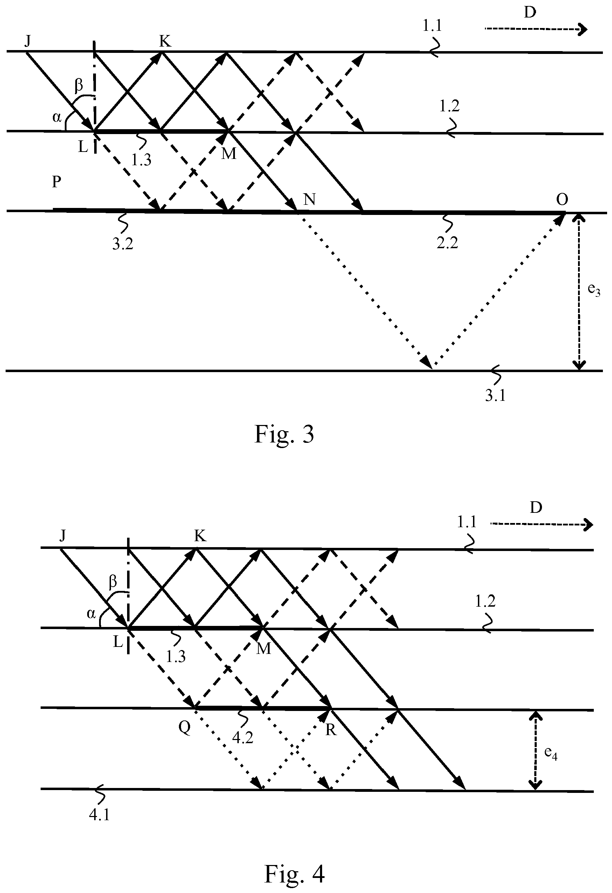

L'uniformité de luminance peut être accrue lorsque le revêtement semi-réfléchissant 1.3 transmet substantiellement autant qu'il réfléchit, c'est-à-dire qu'il existe au maximum un écart de 20% entre la transmissivité *t* et la réflexivité *r* du revêtement semi-réfléchissant 1.3. Dans un mode de réalisation préférentiel, la transmissivité *t* et la réflexivité *r* du revêtement semi-réfléchissant 1.3 sont égales. Il en va de même pour les guides optiques décrits ci-après en relation avec les Figs. 2 et 3.

Il est rappelé que : *t* + *r* = 1 - *a*, où *a* représente l'absorption du signal lumineux par le revêtement semi-réfléchissant 1.3.

Dans un mode de réalisation particulier, la longueur *l* est définie de manière à permettre au signal lumineux injecté dans le guide optique d'effectuer au moins deux rebonds sur le revêtement semi-réfléchissant 1.3. Cela permet d'atténuer l'effet de la différence éventuelle entre transmissivité *t* et réflexivité *r* du revêtement semi-réfléchissant 1.3.. Il en va de même pour les guides optiques décrits ci-après en relation avec les Figs. 2, 3 et 4.

Dans un mode de réalisation préférentiel, la longueur *l* est définie de manière à permettre au signal lumineux injecté dans le guide optique d'effectuer deux rebonds sur le revêtement semi-réfléchissant 1.3.

Ainsi, en prenant par exemple une épaisseur de première 1.1 et seconde 1.2 lames égale à 2 mm et un angle d'incidence minimum $\alpha_{min}$ égal à 23.5°, on obtient une empreinte de longueur 9.2 mm dans le sens de propagation du signal lumineux dans le guide optique. C'est-à-dire que la longueur minimale du revêtement semi-réfléchissant 1.3 est de 9.2 mm. On peut alors établir cette longueur à 18.4 mm pour permettre au signal lumineux injecté d'effectuer deux rebonds sur le revêtement semi-réfléchissant 1.3 pour améliorer l'uniformité de la luminance perçue par l'utilisateur. Une telle longueur de 18.4 mm est adaptée à l'incorporation du guide optique dans des lunettes, pour lesquelles la distance entre le dispositif d'injection et le dispositif d'extraction est de l'ordre de 50 mm.

Une portion d'un second guide optique selon la présente invention est schématiquement illustrée sur la Fig. 2 selon une vue en coupe dans la direction de propagation D d'un signal lumineux dans le guide optique.

Le second guide optique comporte la première lame 1.1, la seconde lame 1.2, le revêtement semi-réfléchissant 1.3 et une troisième lame 2.1 d'épaisseur $e_3$. Les première 1.1, seconde 1.2 et troisième 2.1 lames sont superposées et leurs faces sont parallèles. Le signal lumineux se propage dans le guide optique par réflexions sur lesdites faces des lames. Comme dans le cadre du premier guide optique de la Fig. 1, les première 1.1 et seconde 1.2 lames sont séparées par le revêtement semi-réfléchissant 1.3.

Dans le cadre de ce second guide optique, les première 1.1, seconde 1.2 et troisième 2.1 lames sont constituées d'un même matériau, et l'épaisseur $e_1$ de la première lame 1.1 est égale à l'épaisseur $e_2$ de la seconde lame 1.2, et l'épaisseur $e_3$ de la troisième lame 2.1 est égale à la somme des épaisseurs $e_1$ et $e_2$. Lorsque les première 1.1, seconde 1.2 et troisième 2.1 lames sont constituées dans des matériaux différents, leurs épaisseurs dépendent de leurs indices de réfraction et de l'angle minimum d'incidence du signal lumineux. Lorsqu'une autre lame est ajoutée au guide optique, de manière superposée à la troisième lame 2.1, cette autre lame a une épaisseur égale à la somme des épaisseurs $e_1$

$e_2$ et $e_3$. Et ainsi de suite pour ajouter d'autres lames.

Les seconde 1.2 et troisième 2.1 lames sont partiellement séparées par un revêtement semi-réfléchissant 2.2 similaire au revêtement semi-réfléchissant 1.3. L'agencement de la troisième lame 2.1 et du revêtement semi-réfléchissant 2.2 est tel que les rayons transmis par le revêtement semi-réfléchissant 1.3 sont intégralement réfléchis par la face opposée de la seconde lame 1.2. Les autres rayons du signal lumineux injectés dans la première lame 1.1 et propagés dans la seconde lame 1.2, et les rayons réfléchis dans la seconde lame 1.2 sont partiellement transmis par le revêtement semi-réfléchissant 2.2, afin de continuer leur propagation dans la troisième lame 2.1. Ainsi, une partie du signal lumineux reste dans la première lame 1.1, une autre partie pénètre dans la deuxième lame 1.2 et y est réfléchie, et encore une autre partie pénètre dans la troisième lame 2.1 et y est réfléchie. Sur la Fig. 2, des rayons injectés sont représentés par des flèches en traits pleins, ainsi que les rayons résultant de la réflexion par le revêtement semi-réfléchissant 1.3 de ces rayons injectés, les rayons résultant de la transmission par le revêtement semi-réfléchissant 1.3 de ces rayons injectés sont représentés par des flèches en traits pointillés longs, et les rayons résultant de la transmission par le revêtement semi-réfléchissant 2.2 sont représentés par des flèches en traits pointillés courts.

Le revêtement semi-réfléchissant 2.2 s'étend au moins sur une zone représentée par un segment [N,O] sur la Fig. 2, et le bord de la troisième lame 2.1 est positionné au niveau du point N, le point N correspondant à la projection du point M sur la seconde face de la seconde lame 1.2 selon l'angle d'incidence minimum dans cette seconde lame, c'est-à-dire l'angle $\alpha_{min}$ lorsque les lames sont constituées d'un même matériau. La troisième lame 2.1 est alors absente de la zone du guide optique où le signal lumineux est transmis par ledit revêtement semi-réfléchissant. Le revêtement semi-réfléchissant 2.2 s'étend à partir du point N et la longueur [N,O] du revêtement semi-réfléchissant 2.2 dans la direction de propagation D du signal lumineux dans le guide optique est alors telle que, représentée par $l_3$ :

$$l_3 \geq \frac{2e_3}{\tan \alpha_{min}}$$

La longueur [N,O] du revêtement semi-réfléchissant 2.2 est ainsi définie en fonction de l'épaisseur $e_3$ de la troisième lame 2.1 et de l'angle d'incidence minimum $\alpha_{min}$ du signal lumineux.

Une portion d'un troisième guide optique selon la présente invention est schématiquement illustrée sur la Fig. 3 selon une vue en coupe dans la direction de propagation D d'un signal lumineux dans le guide optique. Ce troisième guide optique est une variante du second guide optique décrit ci-dessus en relation avec la Fig. 2.

Le troisième guide optique comporte la première lame 1.1, la seconde lame 1.2, et une troisième lame 3.1 d'épaisseur $e_3$, et les revêtements semi-réfléchissants 1.3 et 2.2. Le revêtement semi-réfléchissant 2.2 est disposé selon le segment [N,O], comme présenté ci-dessus en relation avec la Fig. 2.

Contrairement au second guide optique décrit ci-dessus en relation avec la Fig. 2, le bord de la troisième lame 3.1 n'est pas positionné au niveau du point N. Pour que les rayons transmis par le revêtement semi-réfléchissant 1.3 soient intégralement réfléchis par la face opposée de la seconde lame 1.2, les seconde 1.2 et troisième 3.1 lames sont partiellement séparées par un revêtement intégralement réfléchissant 3.2. Ce revêtement intégralement réfléchissant 3.2 s'étend sur une surface représentée sur la Fig. 3 par le segment [P,N]. Cette zone doit au moins s'étendre sur une surface qui serait représentée sur la vue en coupe de la Fig. 3 par un segment [P',N], où P' est la projection du point L sur la face opposée de la seconde lame 1.2 selon un angle $\alpha_{max}$ maximum d'incidence du signal lumineux.

Les second et troisième guides optiques comportent alors de manière superposée au moins trois lames formant une succession de lames, un revêtement semi-réfléchissant séparant partiellement chaque lame de la lame suivante dans la succession de lames. Ces guides optiques sont agencés de telle sorte que le signal lumineux transmis par un revêtement semi-réfléchissant entre une lame et la lame suivante ne pénètre pas sans réflexion dans la lame suivante.

Une portion d'un quatrième guide optique selon la présente invention est schématiquement illustrée sur la Fig. 4 selon une vue en coupe dans la direction de propagation D d'un signal lumineux dans le guide optique.

Le second guide optique comporte la première lame 1.1, la seconde lame 1.2, le revêtement semi-réfléchissant 1.3 et une troisième lame 4.1 d'épaisseur $e_4$. Les première 1.1, seconde 1.2 et troisième 4.1 lames sont superposées et leurs faces sont parallèles. Le signal lumineux se propage dans le guide optique par réflexions sur lesdites faces des lames. Comme dans le cadre du premier guide optique de la Fig. 1, les première 1.1 et seconde 1.2 lames sont séparées par le revêtement semi-réfléchissant 1.3.

Les seconde 1.2 et troisième 4.1 lames sont séparées par un revêtement semi-réfléchissant 4.2. Le revêtement semi-réfléchissant 4.2 s'étend sur une zone représentée par le segment [Q,R] sur la Fig. 4. Le point Q correspond à la projection du point L sur la seconde face de la seconde lame 1.2 selon l'angle d'incidence minimum dans cette seconde lame 1.2, c'est-à-dire l'angle $\alpha_{min}$ lorsque les lames sont constituées d'un même matériau. Le point R correspond à la projection du point M sur la seconde face de la seconde lame 1.2 selon l'angle d'incidence minimum dans cette seconde lame 1.2.

Le quatrième guide optique comporte alors de manière superposée au moins trois lames formant une succession de lames, un revêtement semi-réfléchissant séparant partiellement chaque lame de la lame suivante. Ce guide optique est agencé de telle sorte que le signal lumineux transmis sans réflexion intermédiaire par un revêtement semi-réfléchissant est transmis par le revêtement semi-réfléchissant suivant. Il n'y a donc pas réflexion entre les deux revêtements semi-réfléchissants.

L'uniformité de luminance peut être accrue, lorsque le revêtement semi-réfléchissant 1.3 dispose d'une transmissivité *t* égale au double de sa réflexivité *r*, c'est-à-dire *t* = 2/3 et *r* = 1/3 en négligeant l'absorption par le revêtement semi-réfléchissant 1.3, et lorsque le revêtement semi-réfléchissant 4.2 dispose d'une transmissivité *t* égale à sa réflexivité *r*, c'est-à-dire *t* = *r* = 1/2 en négligeant l'absorption par le revêtement semi-réfléchissant 4.2.

Chaque revêtement semi-réfléchissant a alors une réflectivité dépendante de sa position dans la succession de lames, un revêtement semi-réfléchissant transmettant le signal lumineux transmis par un autre revêtement semi-réfléchissant ayant une réflectivité plus forte que celle de ce revêtement semi-réfléchissant.

En d'autres termes, lorsque le revêtement semi-réfléchissant a une position dans la succession de lames, en partant du revêtement semi-réfléchissant frappé en premier par le signal lumineux, a un indice *k,* avec *k = 1, ...,n-1* où *n* est le nombre de lames, alors ce revêtement semi-réfléchissant a une réflectivité r telle que :

$$r = \frac{1}{n-k+1}$$

Il est possible de combiner les principes exposés ci-dessus en relation avec la Fig. 4 et la Fig. 2 ou 3. Dans ce cas, le guide optique comporte un groupe d'au moins trois lames agencées de manière superposée pour former une succession de lames, un revêtement semi-réfléchissant séparant partiellement chaque lame de la lame suivante, le guide optique agencé de telle sorte que le signal lumineux transmis sans réflexion par un revêtement semi-réfléchissant est transmis par le revêtement semi-réfléchissant suivant. Ce groupe correspond à l'agencement présenté ci-dessus en relation avec la Fig. 4. Le guide optique comporte en outre au moins une autre lame, un revêtement semi-réfléchissant séparant partiellement cette autre lame du groupe de lames, le guide optique agencé de telle sorte que le signal lumineux transmis par un revêtement semi-réfléchissant du groupe de lames ne pénètre pas sans réflexion dans ladite autre lame. Cet agencement correspond à celui présenté ci-dessus en relation avec la Fig. 2 ou 3.

Les premier, second, troisième et quatrième guides optiques présentés ci-dessus sont préférentiellement destinés à être intégrés dans des lunettes. La réduction de l'encombrement du dispositif d'injection implique aussi la réduction de l'encombrement de lentilles utilisées en amont du dispositif d'injection, et donc de globalement réduire l'encombrement de ces lunettes. Le confort de l'utilisateur portant ces lunettes est ainsi accru.

Il convient de noter que le signal lumineux peut être injecté directement par la zone d'injection représentée par le segment [J,K]. Par exemple, le dispositif d'injection est monté en saillie sur la face extérieure de la première lame 1.1, c'est-à-dire la face de la première lame 1.1 qui n'est pas positionnée contre la seconde lame 1.2.

Il convient de noter que le signal lumineux peut être injecté indirectement par la zone d'injection représentée par le segment [J,K]. Par exemple, le signal lumineux peut subir au préalable des réflexions sur au moins une des faces de l'une ou l'autre des lames.

Divers agencements du guide optique en ce qui concerne le positionnement du dispositif d'injection sont ainsi schématiquement représentés sur les Figs, 6A à 6G.

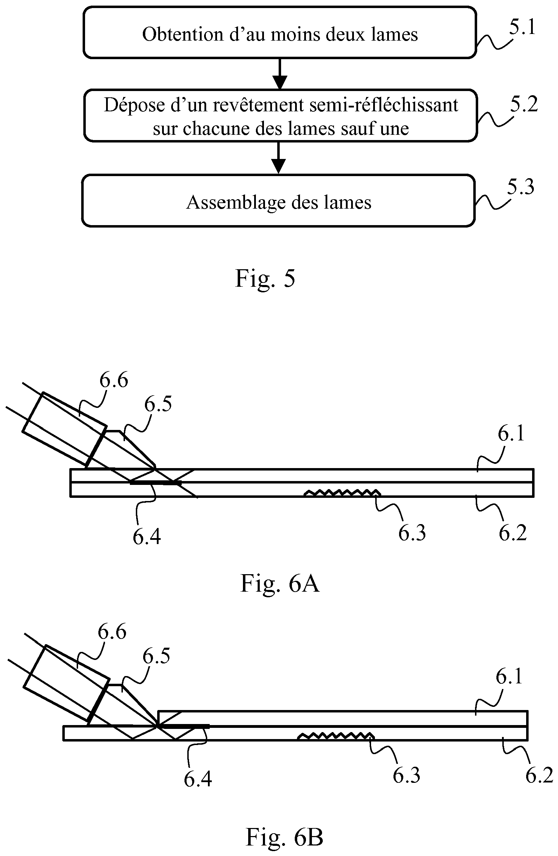

Les Figs. 6A à 6F illustrent schématiquement un guide optique comportant des première 6.1 et seconde 6.2 lames à faces parallèles et montées de manière superposée. Le guide optique comporte en outre une zone d'extraction 6.3. Le guide optique comporte aussi un revêtement semi-réfléchissant 6.4, disposé comme précédemment décrit en relation avec la Fig. 1.

Dans la représentation de la Fig. 6A, le guide optique est utilisé en association avec un dispositif d'injection comportant une pièce d'injection 6.5 montée en saillie sur la première lame 6.1 et un ensemble 6.6 de lentilles, qui permet de projeter une image sous forme d'un faisceau collimaté. L'ensemble 6.6 de lentilles transmet le faisceau collimaté à la pièce d'injection 6.5 qui l'injecte dans la première lame 6.1. Le faisceau injecté est ensuite partiellement réfléchi et partiellement transmis par le revêtement semi-réfléchissant 6.4, comme déjà décrit.

Dans la représentation de la Fig. 6B, le guide optique est utilisé en association avec un dispositif d'injection comportant une pièce d'injection 6.5 montée en saillie sur la seconde lame 6.2. La pièce d'injection 6.5 est montée sur la face de la seconde lame 6.2 qui est montée contre la première lame 6.1. La première lame 6.1 comporte donc un évidement qui permet la mise en place de la pièce d'injection 6.5 contre la seconde lame 6.2. Le dispositif d'injection comporte aussi un ensemble 6.6 de lentilles, qui permet de projeter une image sous forme d'un faisceau collimaté. L'ensemble 6.6 de lentilles transmet le faisceau collimaté à la pièce d'injection 6.5 qui l'injecte dans la seconde lame 6.2. Le faisceau injecté est ensuite réfléchi par la face opposée de la seconde lame 6.2 avant de frapper le revêtement semi-réfléchissant 6.4.

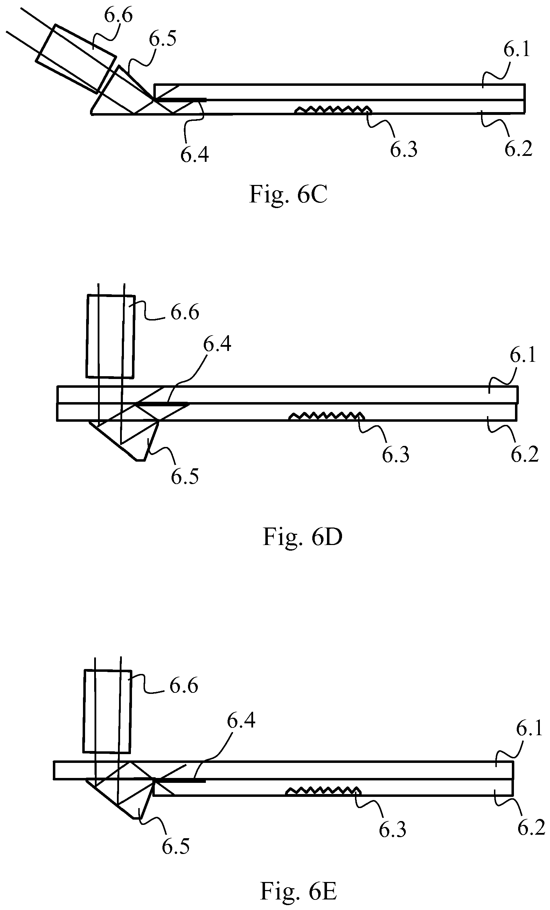

Dans la représentation de la Fig. 6C, le guide optique est utilisé en association avec un dispositif d'injection comportant une pièce d'injection 6.5 qui correspond à une excroissance de la seconde lame 6.2. Cette excroissance s'étend du même côté que celui où est montée la première lame 6.1 sur la seconde lame 6.2. Le dispositif d'injection comporte aussi un ensemble 6.6 de lentilles, qui permet de projeter une image sous forme d'un faisceau collimaté. L'ensemble 6.6 de lentilles transmet le faisceau collimaté à la pièce d'injection 6.5 qui l'injecte dans la seconde lame 6.2. Le faisceau injecté est ensuite réfléchi par la face opposée de la seconde lame 6.2 avant de frapper le revêtement semi-réfléchissant 6.4.

Dans la représentation de la Fig. 6D, le guide optique est utilisé en association avec un dispositif d'injection comportant une pièce d'injection 6.5 montée en saillie sur la seconde lame 6.2. La pièce d'injection 6.5 est montée sur la face de la seconde lame 6.2 opposée à celle qui est montée contre la première lame 6.1. Le dispositif d'injection comporte aussi un ensemble 6.6 de lentilles, qui permet de projeter une image sous forme d'un faisceau collimaté. L'ensemble 6.6 de lentilles est monté du côté de la face de la première lame 6.1 opposée à celle qui est montée contre la seconde lame 6.2. L'ensemble 6.6 de lentilles transmet le faisceau collimaté à la pièce d'injection 6.5 via les première 6.1 et seconde 6.2 lames. Le faisceau collimaté traverse ainsi les première 6.1 et seconde 6.2 lames de manière perpendiculaire aux faces des première 6.1 et seconde 6.2 lames. Le faisceau collimaté se reflète contre une face de la pièce d'injection 6.5 et est injecté par réflexion dans la première lame 6.1. Le faisceau injecté est ensuite partiellement réfléchi et partiellement transmis par le revêtement semi-réfléchissant 6.4, comme déjà décrit.

Dans la représentation de la Fig. 6E, le guide optique est utilisé en association avec un dispositif d'injection comportant une pièce d'injection 6.5 montée en saillie sur la première lame 6.1. La pièce d'injection 6.5 est montée sur la face de la première lame 6.1 qui est montée contre la seconde lame 6.2. La seconde lame 6.2 comporte donc un évidement qui permet la mise en place de la pièce d'injection 6.5 contre la première lame 6.1. Le dispositif d'injection comporte aussi un ensemble 6.6 de lentilles, qui permet de projeter une image sous forme d'un faisceau collimaté. L'ensemble 6.6 de lentilles est monté du côté de la face de la première lame 6.1 opposée à celle qui est montée contre la seconde lame 6.2. L'ensemble 6.6 de lentilles transmet le faisceau collimaté à la pièce d'injection 6.5 via la première lame 6.1. Le faisceau collimaté traverse ainsi la première lame 6.1 de manière perpendiculaire aux faces de la première lame 6.1. Le faisceau collimaté se reflète contre une face de la pièce d'injection 6.5 et est injecté par réflexion dans la première lame 6.1. Le faisceau injecté est ensuite réfléchi par la face opposée de la première lame 6.1 avant de frapper le revêtement semi-réfléchissant 6.4.

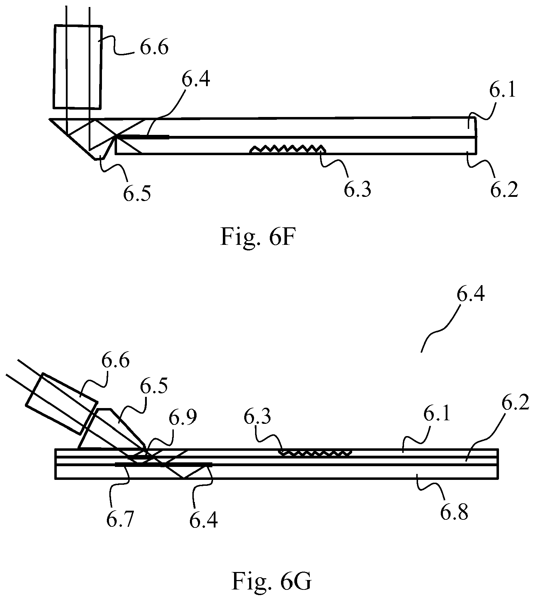

Dans la représentation de la Fig. 6F, le guide optique est utilisé en association avec un dispositif d'injection comportant une pièce d'injection 6.5 qui correspond à une excroissance de la première lame 6.1. Cette excroissance s'étend du même côté que celui où est montée la seconde lame 6.2 sur la première lame 6.1. Le dispositif d'injection comporte aussi un ensemble 6.6 de lentilles, qui permet de projeter une image sous forme d'un faisceau collimaté. L'ensemble 6.6 de lentilles transmet le faisceau collimaté à la pièce d'injection 6.5 via une des faces parallèles de la première lame 6.1. Le faisceau collimaté se reflète contre une face de la pièce d'injection 6.5 et est ensuite réfléchi, avant de frapper le revêtement semi-réfléchissant 6.4, par la face de la première lame 6.1 traversée par le faisceau collimaté en sortie de l'ensemble 6.6 de lentilles.

La Fig. 6G illustre schématiquement un guide optique comportant des première 6.1, seconde 6.2 et troisième 6.8 lames à faces parallèles et montées de manière superposée. Le guide optique comporte en outre une zone d'extraction 6.3. Le guide optique comporte aussi un premier revêtement semi-réfléchissant 6.4 placé entre les seconde 6.2 et troisième 6.8 lames, un second revêtement semi-réfléchissant 6.9 placé entre les première 6.1 et seconde 6.2 lames et un revêtement réfléchissant 6.7. Les premier 6.4 et second 6.9 revêtements semi-réfléchissants et le revêtement réfléchissant 6.7 sont disposés comme précédemment décrit en relation avec la Fig. 3.

Le guide optique est utilisé en association avec un dispositif d'injection comportant une pièce d'injection 6.5 montée en saillie sur la première lame 6.1 et un ensemble 6.6 de lentilles, qui permet de projeter une image sous forme d'un faisceau collimaté. L'ensemble 6.6 de lentilles transmet le faisceau collimaté à la pièce d'injection 6.5 qui l'injecte dans la première lame 6.1. Le faisceau injecté est ensuite partiellement réfléchi et partiellement transmis par les revêtements semi-réfléchissants 6.4 et 6.9, et est réfléchi par le revêtement réfléchissant 6.7, comme déjà décrit.

La Fig. 5 illustre schématiquement un procédé de fabrication d'un guide optique selon la présente invention. Le guide optique comporte une zone d'injection destinée à injecter dans le guide optique un signal lumineux et une zone d'extraction destinée à fournir le signal lumineux après transport par le guide optique.

Dans le procédé de fabrication illustré par le Fig. 5, les éléments de guidage déjà mentionnés sont des lames à faces parallèles. Les mêmes principes s'appliquent lorsque les éléments de guidage ne sont pas des lames à faces parallèles, notamment lorsqu'un des éléments de guidage comporte de manière juxtaposée les zones d'injection et d'extraction déjà mentionnées.

Dans une étape 5.1, au moins deux lames sont obtenues. Les lames sont à faces parallèles. Comme déjà mentionné, elles peuvent être constituées d'un même matériau ou de matériaux différents, ce qui a un impact sur leurs épaisseurs.

Dans une étape 5.2 suivante, un revêtement semi-fléchissant est déposé sur chaque lame sauf une. Le revêtement semi-fléchissant est déposé dans une zone située entre la zone d'injection et la zone d'extraction. Le revêtement semi-réfléchissant est de longueur, dans la direction de propagation du signal lumineux dans le guide optique, dépendante d'un angle minimum d'incidence du signal lumineux et de l'épaisseur d'au moins une des lames que ledit revêtement semi-réfléchissant est destiné à séparer.

Dans une étape 5.3 suivante, les lames sont assemblées de manière superposée, de sorte que chaque revêtement semi-fléchissant sépare deux lames.

L'étape d'assemblage peut en outre être effectuée de sorte que le bord d'au moins une des lames est positionné comme présenté en relation avec la Fig. 2 pour la troisième lame 2.1.

L'étape d'assemblage peut en variante être précédée d'une étape de dépose d'un revêtement intégralement réfléchissant comme présenté ci-dessus en relation avec la Fig. 2 pour le revêtement 3.2.

La dépose de revêtement semi-réfléchissant et l'assemblage des lames peuvent être tels que le signal lumineux transmis par un revêtement semi-réfléchissant entre une lame et la lame suivante dans la succession de lames comprise dans le guide optique ne pénètre pas sans réflexion dans ladite lame suivante, comme présenté ci-dessus en relation avec les Figs. 2 et 3.

La dépose de revêtement semi-réfléchissant et l'assemblage des lames peuvent aussi être tels que le signal lumineux transmis sans réflexion par un revêtement semi-réfléchissant est transmis par le revêtement semi-réfléchissant suivant dans une succession de lames comprise dans le guide optique, comme présenté ci-dessus en relation avec la Fig. 4.

## Revendications

1. Système optique comportant un guide optique comportant une zone d'injection destinée à injecter dans le guide optique un signal lumineux et une zone d'extraction destinée à fournir le signal lumineux après transport par le guide optique, le guide optique comportant, de manière superposée, au moins deux éléments de guidage (1.1, 1.2), **caractérisé en ce que** le système optique comporte aussi un dispositif d'injection comportant un ensemble (6.6) de lentilles qui permet de projeter une image sous forme d'un faisceau collimaté afin de former le signal lumineux, et **en ce que**, dans une zone située entre la zone d'injection et la zone d'extraction, les éléments de guidage sont partiellement séparés l'un de l'autre par un revêtement semi-réfléchissant (1.3) de longueur *l*, dans la direction de propagation du signal lumineux dans le guide optique, dépendante d'un angle minimum d'incidence $\alpha_{min}$ du signal lumineux et de l'épaisseur e d'au moins un des éléments de guidage que ledit revêtement semi-réfléchissant sépare, de telle sorte que la longueur *l* du revêtement semi-réfléchissant est définie comme suit :

$$l \geq \frac{2e}{\tan \alpha_{min}}$$

2. Système optique selon la revendication 1, **caractérisé en ce que** la longueur du revêtement semi-réfléchissant est telle qu'elle permet au moins deux rebonds du signal lumineux sur ledit revêtement semi-réfléchissant.

3. Système optique selon l'une quelconque des revendications 1 et 2, **caractérisé en ce que** la réflectivité et la transmissivité du revêtement semi-réfléchissant sont substantiellement égales.

4. Système optique selon l'une quelconque des revendications 1 et 2, **caractérisé en ce qu'**il comporte de manière superposée au moins trois éléments de guidage (1.1, 1.2, 4.1) formant une succession d'éléments de guidage, un revêtement semi-réfléchissant (1.3, 4.2) séparant partiellement chaque élément de guidage de l'élément de guidage suivant, et **en ce qu'**il est agencé de telle sorte que le signal lumineux transmis par un revêtement semi-réfléchissant est transmis par le revêtement semi-réfléchissant suivant sans réflexion intermédiaire.

5. Système optique selon la revendication 4, **caractérisé en ce que** chaque revêtement semi-réfléchissant a une réflectivité dépendante de sa position dans la succession d'éléments de guidage, un revêtement semi-réfléchissant (4.2) transmettant le signal lumineux transmis par un autre revêtement semi-réfléchissant (1.3) ayant une réflectivité plus forte que celle de ce revêtement semi-réfléchissant.

6. Système optique selon l'une quelconque des revendications 1 à 5, **caractérisé en ce que** les éléments de guidage sont de même épaisseur.

7. Système optique selon la revendication 6, **caractérisé en ce que** les éléments de guidage sont constitués d'un même matériau.

**8.** Système optique selon l'une quelconque des revendications 1 à 5, **caractérisé en ce que** les éléments de guidage sont fabriqués dans des matériaux différents, et **en ce que** leurs épaisseurs dépendent de leurs indices de réfraction et de l'angle minimum d'incidence du signal lumineux.

**9.** Système optique selon l'une quelconque des revendications 1 et 2, **caractérisé en ce qu'**il comporte de manière superposée au moins trois éléments de guidage (1.1, 1.2, 2.1) formant une succession d'éléments de guidage, un revêtement semi-réfléchissant (1.3, 2.2) séparant partiellement chaque élément de guidage de l'élément de guidage suivant, et **en ce qu'**il est agencé de telle sorte que le signal lumineux transmis par un revêtement semi-réfléchissant entre un élément de guidage et l'élément de guidage suivant ne pénètre pas sans réflexion dans ledit élément de guidage suivant.

**10.** Système optique selon l'une quelconque des revendications 1 et 2, **caractérisé en ce qu'**il comporte un groupe d'au moins trois éléments de guidage agencés de manière superposée pour former une succession d'éléments de guidage, un revêtement semi-réfléchissant séparant partiellement chaque élément de guidage de l'élément de guidage suivant, le guide optique étant agencé de telle sorte que le signal lumineux transmis sans réflexion par un revêtement semi-réfléchissant est transmis par le revêtement semi-réfléchissant suivant, et **en ce qu'**il comporte au moins un autre élément de guidage, un revêtement semi-réfléchissant séparant partiellement cet autre élément de guidage dudit groupe d'éléments de guidage, le guide optique étant agencé de telle sorte que le signal lumineux transmis par un revêtement semi-réfléchissant dudit groupe d'éléments de guidage ne pénètre pas sans réflexion dans ledit autre élément de guidage.

**11.** Système optique selon l'une quelconque des revendications 9 et 10, **caractérisé en ce que**, pour que le signal lumineux transmis par un revêtement semi-réfléchissant entre un élément de guidage et l'élément de guidage suivant ne pénètre pas sans réflexion dans ledit élément de guidage suivant, ledit élément de guidage et ledit élément de guidage suivant sont partiellement séparés par un revêtement réfléchissant (3.2).

**12.** Système optique selon l'une quelconque des revendications 9 et 10, **caractérisé en ce que**, pour que le signal lumineux transmis par un revêtement semi-réfléchissant entre un élément de guidage et l'élément de guidage suivant ne pénètre pas sans réflexion dans ledit élément de guidage suivant, ledit élément de guidage suivant (2.1) est absent d'une zone du guide optique où le signal lumineux est transmis par le ledit revêtement semi-réfléchissant.

**Patentansprüche**

**1.** Optisches System, welches einen Lichtwellenleiter umfasst, der einen Einkopplungsbereich, der dazu bestimmt ist, ein Lichtsignal in den Lichtwellenleiter einzukoppeln, und einen Auskopplungsbereich, der dazu bestimmt ist, das Lichtsignal nach dem Transport durch den Lichtwellenleiter zu liefern, umfasst, wobei der Lichtwellenleiter, übereinanderliegend angeordnet, wenigstens zwei Leitelemente (1.1, 1.2) umfasst, **dadurch gekennzeichnet, dass** das optische System außerdem eine Einkopplungsvorrichtung umfasst, die eine Anordnung (6.6) von Linsen umfasst, welche es ermöglicht, ein Bild in Form eines kollimierten Bündels zu projizieren, um das Lichtsignal zu bilden, und dadurch, dass in einem Bereich, der sich zwischen dem Einkopplungsbereich und dem Auskopplungsbereich befindet, die Leitelemente durch eine halbreflektierende Beschichtung (1.3) der Länge *l* in der Ausbreitungsrichtung des Lichtsignals in dem Lichtwellenleiter teilweise voneinander getrennt sind, die von einem minimalen Einfallswinkel $\alpha_{min}$ des Lichtsignals und von der Dicke e wenigstens eines der Leitelemente, welche die halbreflektierende Beschichtung trennt, abhängig ist, derart, dass die Länge *l* der halbreflektierenden Beschichtung wie folgt definiert ist:

$$l \geq \frac{2e}{\tan \alpha_{\min}} \ .$$

**2.** Optisches System nach Anspruch 1, **dadurch gekennzeichnet, dass** die Länge der halbreflektierenden Beschichtung derart ist, dass sie wenigstens zwei Zurückprallungen des Lichtsignals an der halbreflektierenden Beschichtung ermöglicht.

**3.** Optisches System nach einem der Ansprüche 1 und 2, **dadurch gekennzeichnet, dass** das Reflexionsvermögen und das Transmissionsvermögen der halbreflektierenden Beschichtung im Wesentlichen gleich sind.

**4.** Optisches System nach einem der Ansprüche 1 und 2, **dadurch gekennzeichnet, dass** es, übereinanderliegend angeordnet, wenigstens drei Leitelemente (1.1, 1.2, 4.1) umfasst, die eine Folge von Leitelementen bilden, wobei eine halbreflektierende Beschichtung (1.3, 4.2) jedes Leitelement teilweise von dem folgenden Leitelement trennt, und dadurch, dass es derart eingerichtet ist, dass das von einer halbreflektierenden Beschichtung übertragene Lichtsignal von der folgenden halbreflektierenden Beschichtung ohne Zwischenreflexion übertragen wird.

**5.** Optisches System nach Anspruch 4, **dadurch gekennzeichnet, dass** jede halbreflektierende Beschichtung ein Reflexionsvermögen aufweist, das von ihrer Position in der Folge von Leitelementen abhängt, wobei eine halbreflektierende Beschichtung (4.2), die das von einer anderen halbreflektierenden Beschichtung (1.3) übertragene Lichtsignal überträgt, ein Reflexionsvermögen aufweist, das höher als dasjenige dieser halbreflektierenden Beschichtung ist.

**6.** Optisches System nach einem der Ansprüche 1 bis 5, **dadurch gekennzeichnet, dass** die Leitelemente dieselbe Dicke aufweisen.

**7.** Optisches System nach Anspruch 6, **dadurch gekennzeichnet, dass** die Leitelemente aus demselben Material bestehen.

**8.** Optisches System nach einem der Ansprüche 1 bis 5, **dadurch gekennzeichnet, dass** die Leitelemente aus verschiedenen Materialien hergestellt sind, und dadurch, dass ihre Dicken von ihren Brechungsindizes und von dem minimalen Einfallswinkel des Lichtsignals abhängen.

**9.** Optisches System nach einem der Ansprüche 1 und 2, **dadurch gekennzeichnet, dass** es, übereinanderliegend angeordnet, wenigstens drei Leitelemente (1.1, 1.2, 2.1) umfasst, die eine Folge von Leitelementen bilden, wobei eine halbreflektierende Beschichtung (1.3, 2.2) jedes Leitelement teilweise von dem folgenden Leitelement trennt, und dadurch, dass es derart eingerichtet ist, dass das Lichtsignal, das von einer halbreflektierenden Beschichtung zwischen einem Leitelement und dem folgenden Leitelement übertragen wird, nicht ohne Reflexion in das folgende Leitelement eindringt.

**10.** Optisches System nach einem der Ansprüche 1 und 2, **dadurch gekennzeichnet, dass** es eine Gruppe von wenigstens drei Leitelementen umfasst, die übereinanderliegend angeordnet sind, um eine Folge von Leitelementen zu bilden, wobei eine halbreflektierende Beschichtung jedes Leitelement teilweise von dem folgenden Leitelement trennt, wobei der Lichtwellenleiter derart eingerichtet ist, dass das Lichtsignal, das ohne Reflexion von einer halbreflektierenden Beschichtung übertragen wird, von der folgenden halbreflektierenden Beschichtung übertragen wird, und dadurch, dass es wenigstens ein anderes Leitelement umfasst, wobei eine halbreflektierende Beschichtung dieses andere Leitelement teilweise von der Gruppe von Leitelementen trennt, wobei der Lichtwellenleiter derart eingerichtet ist, dass das Lichtsignal, das von einer halbreflektierenden Beschichtung der Gruppe von Leitelementen übertragen wird, nicht ohne Reflexion in das andere Leitelement eindringt.

**11.** Optisches System nach einem der Ansprüche 9 und 10, **dadurch gekennzeichnet, dass**, damit das Lichtsignal, das von einer halbreflektierenden Beschichtung zwischen einem Leitelement und dem folgenden Leitelement übertragen wird, nicht ohne Reflexion in das folgende Leitelement eindringt, dieses Leitelement und das folgende Leitelement durch eine reflektierende Beschichtung (3.2) teilweise getrennt sind.

**12.** Optisches System nach einem der Ansprüche 9 und 10, **dadurch gekennzeichnet, dass**, damit das Lichtsignal, das von einer halbreflektierenden Beschichtung zwischen einem Leitelement und dem folgenden Leitelement übertragen wird, nicht ohne Reflexion in das folgende Leitelement eindringt, dieses folgende Leitelement (2.1) in einem Bereich des Lichtwellenleiters fehlt, wo das Lichtsignal von der halbreflektierenden Beschichtung übertragen wird.

**Claims**

**1.** Optical system comprising an optical guide comprising an injection zone intended to inject a light signal into the optical guide and an extraction zone intended to provide the light signal after transport by the optical guide, the optical guide comprising, in a superimposed manner, at least two guidance elements (1.1, 1.2),
**characterized in that** the optical system further comprises an injection device comprising a set (6.6) of lenses which enables projecting an image in the form of a collimated beam so as to form the light signal, and **in that** in a zone situated between the injection zone and the extraction zone, the guidance elements are partially separated from each other by a semi-reflective coating (1.3) with a length *l*, in the direction of propagation of the light signal in the optical guide, dependent on a minimum angle $\alpha_{min}$ of incidence of the light signal and on the thickness e of at least one of the guidance elements that said semi-reflective coating separates, so that the length *l* of the semi-reflective coating is defined as follows:

$$l \geq \frac{2e}{\tan \alpha_{min}}$$

2. Optical system according to claim 1, **characterised in that** the length of the semi-reflective coating is such that it allows at least two rebounds of the light signal on said semi-reflective coating.

3. Optical system according to either one of claims 1 and 2, **characterised in that** the reflectivity and the transmissivity of the semi-reflective coating are substantially equal.

4. Optical system according to any one of claims 1 and 2, **characterised in that** it comprises, in a superimposed manner, at least three guidance elements (1.1, 1.2, 4.1) forming a succession of guidance elements, a semi-reflective coating (1.3, 4.2) partially separating each guidance element from the following guidance element, and **in that** it is arranged so that the light signal transmitted by a semi-reflective coating is transmitted by the following semi-reflective coating without intermediate reflection.

5. Optical system according to claim 4, **characterised in that** each semi-reflective coating has a reflectivity dependent on its position in the succession of guidance elements, one semi-reflective coating (4.2) transmitting the light signal transmitted by another semi-reflective coating (1.3) having a higher reflectivity than the one of this semi-reflective coating.

6. Optical system according to any one of claims 1 to 5, **characterised in that** the guidance elements have the same thickness.

7. Optical system according to claim 6, **characterised in that** the guidance elements consist of the same material.

8. Optical system according to any one of claims 1 to 5, **characterised in that** the guidance elements are manufactured from different materials, and **in that** their thicknesses depend on their refractive indices and on the minimum angle of incidence of the light signal.

9. Optical system according to any one of claims 1 and 2, **characterised in that** it comprises, in a superimposed manner, at least three guidance elements (1.1, 1.2, 2.1) forming a succession of guidance elements, a semi-reflective coating (1.3, 2.2) partially separating each guidance element from the following guidance element, and **in that** it is arranged so that the light signal transmitted by a semi-reflective coating between one guidance element and the following guidance element does not enter said following guidance element without reflection.

10. Optical system according to any one of claims 1 and 2, **characterised in that** it comprises a group of at least three guidance elements arranged in a superimposed manner so as to form a succession of guidance elements, a semi-reflective coating partially separating each guidance element from the following guidance element, the optical guide being arranged so that the light signal transmitted without reflection by one semi-reflective coating is transmitted by the following semi-reflective coating,
and **in that** it comprises at least one other guidance element, a semi-reflective coating partially separating this other guidance element from said group of guidance elements, the optical guide being arranged so that the light signal transmitted by a semi-reflective coating in said group of guidance elements does not enter said other guidance element without reflection

11. Optical system according to any one of claims 9 and 10, **characterised in that**, for the light signal transmitted by a semi-reflective coating between one guidance element and the following guidance element not to enter said following guidance element without reflection, said guidance element and said following guidance element are partially separated by a reflective coating (3.2).

12. Optical system according to any one of claims 9 and 10, **characterised in that**, for the light signal transmitted by a semi-reflective coating between one guidance element and the following guidance element not to enter said following guidance element, said following guidance element (2.1) is absent from a zone of the optical guide where the light signal is transmitted by said semi-reflective coating.

D

J        K        1.1

β

α

L        M

1.3

β'

1.2        e₁        e₂

## Fig. 1

D

J        K        1.1

β

α

L        M

1.3

β'

N        O

1.2        2.2

2.1        e₃

## Fig. 2

Fig. 3

Fig. 4

Obtention d'au moins deux lames — 5.1

Dépose d'un revêtement semi-réfléchissant sur chacune des lames sauf une — 5.2

Assemblage des lames — 5.3

Fig. 5

Fig. 6A

Fig. 6B

Fig. 6C

Fig. 6D

Fig. 6E

Fig. 6F

Fig. 6G

**EP 2 791 717 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008153528 A1
- WO 2009076125 A1